**Europäisches Patentamt**

**European Patent Office**

**Office européen des brevets**

(19)

(11) Veröffentlichungsnummer: **0 293 493**
**B1**

(12) **EUROPÄISCHE PATENTSCHRIFT**

(45) Veröffentlichungstag der Patentschrift: **01.08.90**

(21) Anmeldenummer: **88900263.0**

(22) Anmeldetag: **05.11.87**

(86) Internationale Anmeldenummer:
**PCT/SU87/00124**

(87) Internationale Veröffentlichungsnummer:
**WO 88/04823 30.06.88 Gazette 88/14**

(51) Int. Cl.⁵: **G 11 B 7/24**

(54) **OPTISCH-MECHANISCHE SPEICHERVORRICHTUNG.**

(30) Priorität: **15.12.86 SU 4157165**

(43) Veröffentlichungstag der Anmeldung:
**07.12.88 Patentblatt 88/49**

(45) Bekanntmachung des Hinweises auf die
Patenterteilung:
**01.08.90 Patentblatt 90/31**

(84) Benannte Vertragsstaaten:
**AT BE CH DE FR GB IT LI LU NL SE**

(56) Entgegenhaltungen:
**EP-A-0 166 199**
**WO-A-87/04840**
**GB-A-1 482 668**
**GB-A-2 151 066**
**US-A-4 535 434**

(73) Patentinhaber: **INSTITUT PROBLEM
MODELIROVANIA V ENERGETIKE AKADEMII
NAUK UKRAINSKOI SSR**
**pr. Pobedy, 56**
**Kiev, 252680 (SU)**

(72) Erfinder: **ANTONOV, Alexandr Alexandrovich**
**pr. Vernadskogo, 85-64**
**Kiev, 252142 (SU)**
Erfinder: **PETROV, Vyacheslav Vasilievich**
**ul. Montazhnikov, 104**
**Kiev, 252069 (SU)**
Erfinder: **ZELINSKY, Alexandr Antonovich**
**ul. Yakuba Kolasa, 6-231**
**Kiev, 252146 (SU)**

(74) Vertreter: **Füchsle, Klaus, Dipl.-Ing. et al
Hoffmann . Eitle & Partner Patentanwälte
Arabellastrasse 4
D-8000 München 81 (DE)**

**Beschreibung**

Die Erfindung betrifft Mittel zur Aufzeichnung, Speicherung und Verarbeitung von Informationen und bezieht sich auf optische Informationsträger und optische Speicher mit relativer Verschiebung des Schreib-Lese-Kopfes und des Informationsträgers, insbesondere auf optische Speicher.

Es ist ein optischer Speicher (IEEE. Spectrum, 1979, 11, Nr. 2, Seiten 33 bis 38) bekannt, der—optisch gekoppelt—eine einen Laser und einen Lichtmodulator umfassende Quelle modulierter elektromagnetischer Strahlung, einen Informationsträger in Form einer hermetisch abgeschlossenen Platte, auf deren Innenflächen der durchsichtigen Wände eine Aufzeichnungsschicht aufgetragen ist, einen beweglichen optischen Kopf mit einem Objektiv und eine Positioniereinrichtung enthält.

Die bekannte Speicheranordnung hat eine geringe mechanische Festigkeit der hermetischen optischen Platte und es sind deren Arbeitsflächen bei Änderungen des atmosphärischen Druckes verformbar. Die Inkonstanz der Oberflächen-Schreibdichte und die geringe Auflösung des Objektivs im beweglichen optischen Kopf, welches im Luftmedium betrieben wird (wobei dessen numerische Apertur damit beachtlich geringer als 1 ist), vermindern die Informationsaufzeichnungsdichte.

WO—A—8704840, die einen nicht vorveröffentlichten Stand der Technik darstellt, beschreibt einen optischen Speicher, der einen zylindrischen Informationsträger aufweist, auf dessen röhrenförmigen Substrat eine Aufzeichnungsschicht angeordnet ist. Ferner ist ein stationärer Behälter vorgesehen, der den Informationsträger aufnimmt, der koaxial in diesem angeordnet ist, wobei der Innenraum des Behälters mit einer Immersionsflüssigkeit gefüllt ist und in seiner Seitenwand eine Immersionslinse angeordnet ist. Die Länge des Innenraumes des Containers ist zumindest zweimal so groß wie die Länge der Aufzeichnungsschicht des zylindrischen Informationsträgers. Der bekannte Speicher weist ferner Antriebe für die Drehung und die axiale Verschiebung des zylindrischen Informationsträgers bezüglich des stationären Behälters auf.

Der Behälter dieses Speichers ist jedoch einstückig ausgeführt.

Es ist deshalb ein optischer Speichervorgesehen, der einen zylindrischen Informationsträger in Form eines röhrenförmigen Substrates mit einer Aufzeichnungsschicht enthält, welcher im Inneren des zylindrischen Gehäuses koaxial angeordnet ist, und ferner eine Quelle für einen modulierbaren Lichtstrahl aufweist, wobei an den Stirnenden des zylindrischen Informationsträgers Flansche angebracht sind, wobei an mindestens einem der letzteren mittels einer lösbaren Verbindung ein Arbeitsorgan zur Drehung und/oder axialen Verschiebung des zylindrischen Informationsträgers befestigt ist, während das Gehäuse aus zwei miteinander hermetisch verbundenen Teilen ausgeführt ist, von denen einer als abnehmbarer Behälter ausgebildet ist, wobei der Antrieb zur Drehung und axialen Verschiebung auf der Außenseite des Gehäuses angeordnet ist, in dessen Innerem eine Immersionsflüssigkeit vorhanden ist.

Es ist zweckmäßig, daß die Durchmesser der Flansche den äußeren Durchmesser des zylindrischen Informationsträgers übersteigen.

Es wird empfohlen, den zylindrischen Informationsträger aus einem Kunststoff zu fertigen.

Es ist auch zweckdienlich, daß der abnehmbare Behälter eine Vorrichtung zum Festhalten des Flansches enthält und zur Beförderung und Lagerung des zylindrischen Informationsträgers dient.

Eine solche Ausführung des Speichers ermöglicht es, daß keine Berührung des zylindrischen Gehäuses mit dem dazu koaxial angeordneten zylindrischen Informationsträger stattfindet und schützt dadurch die Oberfläche des zylindrischen Informationsträgers vor Beschädigungen. Dadurch, daß der zylindrische Informationsträger aus Kunststoff gefertigt ist, ist die Möglichkeit gegeben, die Flansche an den Stirnenden des zylindrischen Informationsträgers einzupressen, und wird die Leistung der elektromagnetischen Strahlung, die zur Informationsaufzeichnung benötigt wird, vermindert, was zur Verkleinerung der Abmessungen der Quelle elektromagnetischer Strahlung und des ganzen Speichers beiträgt. Die Reduzierung der geforderten Strahlungsleistung für die Informationsaufzeichnung ist mit einer niedrigen Wärmeleitfähigkeit des Kunststoffes verbunden, was eine erhöhte Empfindlichkeit der Aufzeichnungsschicht zur Folge hat.

Die Vorrichtung zum Festhalten des Flansches verhindert das Herausfallen des Informationsträgers beim Herausnehmen desselben aus dem Gehäuse; der abnehmbare Behälter gewährleistet wiederum die Unversehrtheit und den Staubschutz bei Transport und Lagerung.

Im folgenden wird die Erfindung an Hand von Ausführungsbeispielen unter Bezugnahme auf die beigefügten Zeichnungen näher erläutert. Es zeigen:

Fig. 1 einen erfindungsgemässen optisch-mechanischen Speicher mit Elektronantrieben zur Drehung und axialen Verschiebung beim Schreiben und Lesen von Informationen und mit einer Vorrichtung zum Festhalten eines Flansches;

Fig. 2 denselben Speicher beim Herausnehmen des zylindrischen Trägers aus dem Gehäuse;

Fig. 3 einen zylindrischen Informationsträger in einem Transportbehälter, gemäss der Erfindung;

Fig. 4 einen erfindungsgemäßen optisch-mechanischen Speicher mit einem Elektroantrieb zur Drehung und einem Hydraulikantrieb zur axialen Verschiebung beim Schreiben und Lesen von Informationen und mit einer Vorrichtung zum Festhalten eines Flansches;

Fig. 5 einen zylindrischen Informationsträger in einem Transportbehälter, gemäß der Erfindung;

Fig. 6 eine Ansicht I in Fig. 1.

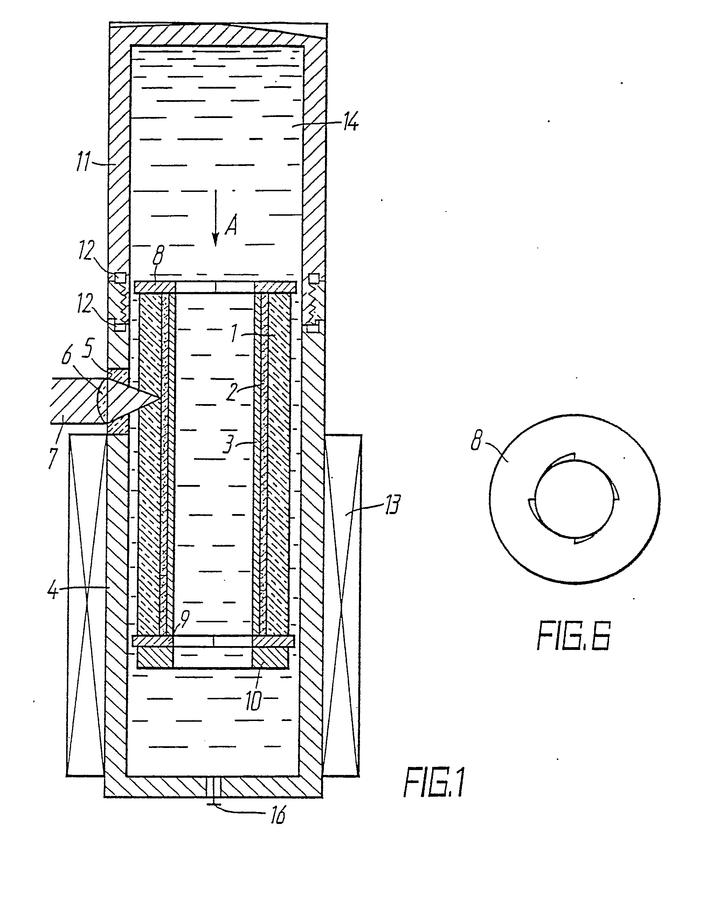

Der optische-mechanische Speicher enthält einen zylindrischen Informationsträger 1 (Fig. 1), der in Form eines durchsichtigen röhrenförmigen Substrates aus einem Kunststoff (es ist auch eine Realisierung des Speichers bei der Ausführung des röhrenförmigen Substrates aus anderen durchsichtigen Materialien möglich) mit einer Aufzeichnungsschicht 2 und einer Schutzschicht 3 ausgeführt ist.

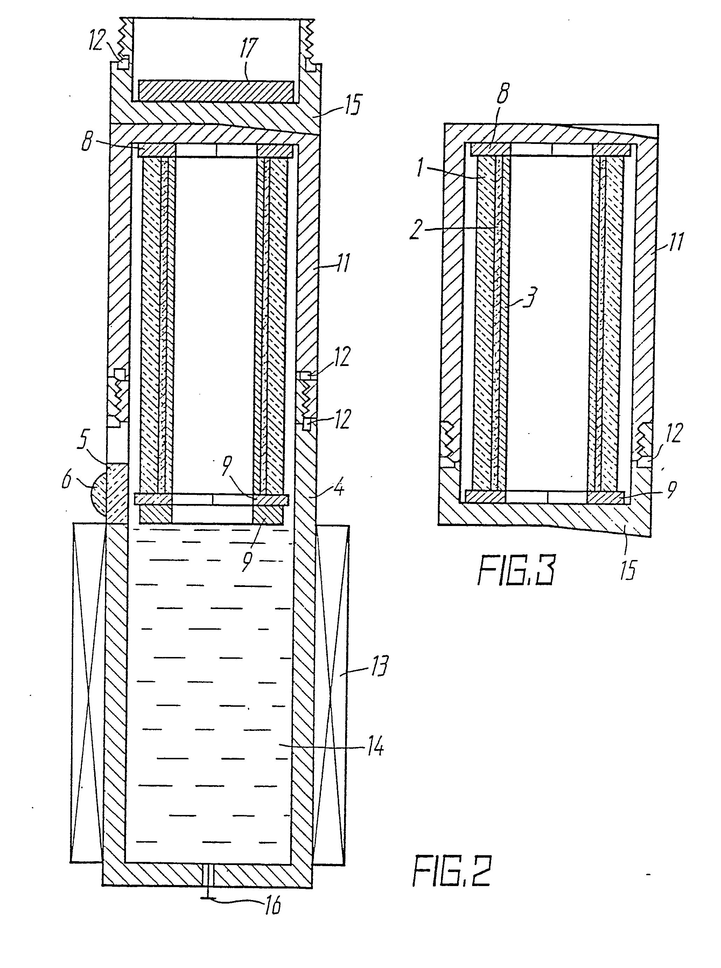

Der zylindrische Informationsträger 1 ist in einem zylindrischen Gehäuse koaxial angeordnet, in dessen Seitenwand ein durchsichtiges Fenster 5 mit einer darin untergebrachten feststehenden Linse 6 vorhanden ist, durch die die Laserstrahlung 7 (die Strahlungsquelle ist in der Zeichnung nicht dargestellt) fokussiert wird. An den Stirnenden des zylindrischen Informationsträgers 1 sind Flansche 8 und 9 befestigt. Am Flansch 9 ist mittels einer lösbaren Bajonettverbindung ein Arbeitsorgan 10 eines Antriebs zur Drehung und axialen Verschiebung des zylindrischen Informationsträgers 1 befestigt. Das Gehäuse 4 weist einen Deckel auf, der als abnehmbarer Behälter 11 ausgebildet ist, der mit dem Gehäuse mittels einer Gewindeverbindung und hermetisierender Abdichtungen 12 verbunden ist. Auf der Außenseite des Gehäuses 4 ist das Arbeitsorgan zur Drehung und axialen Verschiebung angeordnet, welches als Ständer 13 ausgebildet ist. Im Inneren des Gehäuses 4 ist eine Immersionsflüssigkeit 14 vorhanden, mit der der Innenraum des Gehäuses 4 und des abnehmbaren Behälters 11 gefüllt wird. Der Behälter 11 kann für den Transport und die Lagerung des Informationsträgers 1 bestimmt sein. An einem Stirnende des Behälters 11 ist ein Deckel 15 (Fig. 2) angebracht, der zugleich als Schlüssel zum Losschrauben des Behälters 11 vom Gehäuse 4 dient und die Funktion einer Vorrichtung zum Festhalten des Flansches 8 erfüllt. Bei der Ausführung einer Operation, bei der der zylindrische Informationsträger 1 aus dem Gehäuse 4 herausgenommen werden muß, wird es teilweise oder völlig von der Immersionsflüssigkeit 14 über ein Überstromventil 16 befreit, das an der Stirnseite des Gehäuses 4 angebracht ist. In den Deckel 15 ist ein Dauermagnet 17 eingebaut, wobei der Flansch 8 aus einem weichmagnetischen Werkstoff hergestellt wird.

In Fig. 6 ist gezeigt, wie die Stirnfläche des Flansches 8 ausgeführt ist, wobei die Stirnfläche des Flansches 9 eine ähnliche Ausführung hat.

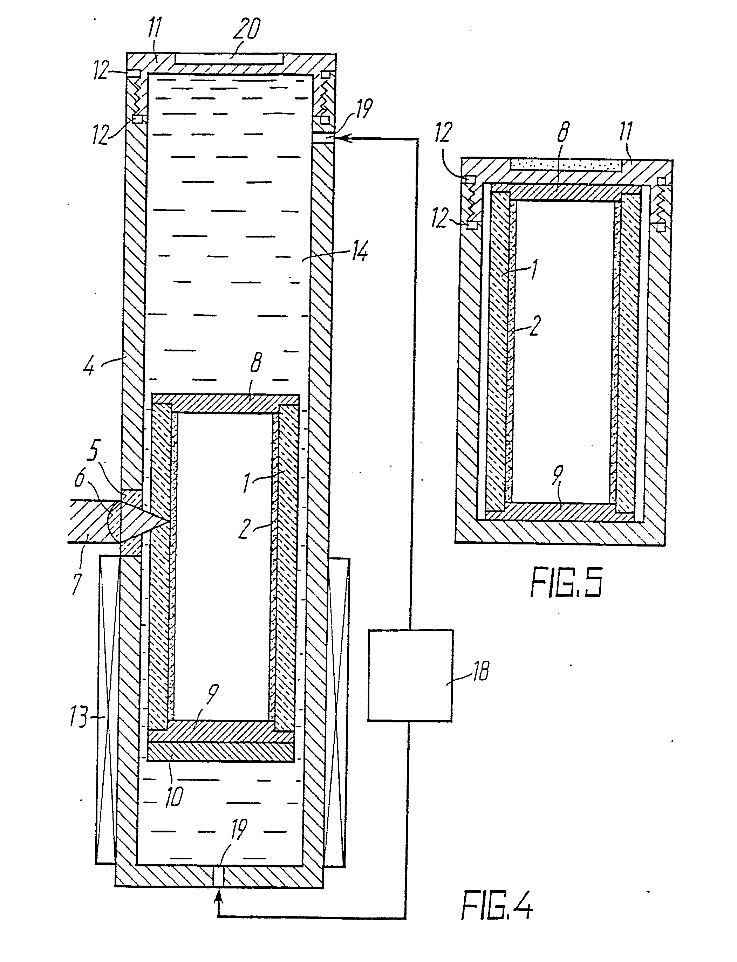

Die in Fig. 4 bis 5 gezeigte Ausführungsform des optisch-mechanischen Speichers enthält einen zylindrischen Informationsträger 1, der in Form eines zylindrischen Substrates mit einer auf dessen Innenfläche aufgetragenen Aufzeichnungsschicht 2. An den Stirnteilen des zylindrischen Informationsträgers 1 sind Flansche 8 und 9 aus einem weichmagnetischen Werkstoff befestigt. Mittels z.B. einer Bajonettverbindung ist mit dem Flansch 9 des Arbeitsorgan 10 des elektrischen Drehantriebs gekuppelt. Der zylindrische Informationsträger 1 ist im Gehäuse 4 untergebracht, an dessen Seitenfläche ein Ständer 12 des elektrischen Drehantriebs eingebaut. In der Seitenwand des Gehäuses 4 ist ein durchsichtiges Fenster 5 vorhanden, in dem eine unbewegliche Linse 6 angeordnet ist.

Das Positionieren des zylindrischen Informationsträgers 1 wird durch einen hydraulischen Axialantrieb unter Verwendung einer Hydraulikpumpe 18 durchgeführt, mit deren Hilfe über Bohrungen 19 die Immersionsflüssigkeit 14 durchgepumpt wird. Das Gehäuse 4 ist mit einem Behälter 14 versehen, der mit dem Gehäuse über eine Gewindeverbindung mit hermetisierenden Abdichtungen 12 zusammengekoppelt ist. Im Behälter 11 ist eine Vertiefung 20 vorhanden, die zur Aufnahme des Dauermagneten für eine Zeit dient, während der der Informationsträger 1 aus dem Gehäuse 4 herausgenommen wird. In Fig. 5 ist der zylindrische Informationsträger 1 gezeigt, der im Transportbehälter 11 untergebracht ist.

Denkbar ist auch eine Ausführungsform des Speichers, bei der das Arbeitsorgan 10 als Arbeitsorgan des Verschiebungsantriebs verwendet wird, das an den Flansch angeschlossen ist.

Der Speicher funktioniert wie folgt.

Die Strahlung 7 des (der Einfachheit halber nichtgezeigten) Lasers (Fig. 1, 2, 3) wird im Schreib- und Wiedergabebetrieb auf der Aufzeichnungsschicht 2 des zylindrischen Informationsträgers 1 fokussiert. Dabei werden im Schreibbetrieb auf der Aufzeichnungsschicht 2 entsprechend dem Modulationsgesetz des Laserstrahls Pits (englische Bezeichnung für "Grübchen") einer aufgezeichneten Information erzeugt. Im Wiedergabebetrieb wird der Ausgangslaserstrahl unveränderlicher Intensität bei der Reflexion von der Aufzeichnungsschicht 2 durch die auf dem Informationsträger enthaltenen Aufzeichnung moduliert. Müssen die zylindrischen Informationsträger 1 ausgewechselt oder transportiert werden, so wird der Deckel 15 mit dem abnehmbaren Behälter 11 zusammengekoppelt und dann im Inneren des Deckel 15 der Dauermagnet 17 untergebracht. Durch den Antrieb zur axialen Verschiebung wird der zylindrische Informationsträger 1 in die Endstellung bewegt und in dieser Stellung durch den Dauermagneten 17 gehalten, worauf der abnehmbare Behälter 11 zusammen mit dem im Inneren des letzteren befindlichen Informationsträgers abgeschraubt wird. Hierbei wird über das Überstromventil 16 der Innenraum des Gehäuses 4 enthermetisiert. Alsdann wird der Behälter 11 (zum Vermeiden des Herausfallens des Informationsträgers aus diesem Behälter) umgedreht und vom Deckel 16 losgelöst, aus dem der Dauermagnet 17 herausgenommen wird. Schließlich wird der Deckel auf den Behälter 11 aufgeschraubt.

Während des Herausnehmens des Trägers 1 aus dem Gehäuse 4 kann nötigenfalls aus dem letzteren die Immersionsflüssigkeit teilweise oder völlig entfernt werden. Das Herausnehmen des zylindrischen Informationsträgers aus dem Transportbehälter 11 und die Unterbringung des Trägers im Gehäuse 4 erfolgt in umgekehrter Reihenfolge.

Bei der in Fig. 4 und 5 dargestellten Ausführungsform wird die Drehung des zylindrischen Informationsträgers 1 durch einen elektrischen Antrieb und das Positionieren des Trägers 1 durch die von einem hydraulischen Antrieb unter Verwendung einer Hydraulikpumpe vorgenommene Axialverschiebung gewährleistet. Das Schreiben und Lesen auf diesem Informationsträger erfolgt mit der Laserstrahlung 7, die auf die Aufzeichnungsschicht mit Hilfe der Linse 6 fokussiert wird. Das Herausnehmen des zylindrischen Informationsträgers 1 aus dem Gehäuse 4 und die Unterbringung des Trägers 1 im Transportbehälter wird ähnlich der obenbeschriebenen Ausführungsform des Speichers vorgenommen.

Die Erfindung kann in externen Speichern elektronischer Rechner, z.B. bei der Organisation von Datenbanken, Informationswiederauffindungssystemen sowie in Bild- und Schallaufzeichnungseinrichtungen verwendet werden.

**Patentansprüche**

1. Optisch-mechanischer Speicher, enthaltend einen zylindrischen Informationsträger (1) in Form eines röhrenförmigen Substrates mit einer Aufzeichnungsschicht (2), welcher im Inneren eines zylindrischen Gehäuses (4) koaxial angeordnet ist, und eine Quelle (7) für einen modulierbaren Lichtstrahl, wobei an den Stirnenden des zylindrischen Informationsträgers (1) Flansche (8, 9) angebracht sind, an mindestens einem von denen mittels einer lösbaren Verbindung ein Arbeitsorgan (10) eines Antriebs (13) zur Drehung und/oder Axialverschiebung des zylindrischen Trägers (1) befestigt ist, während das Gehäuse (4) aus zwei miteinander hermetisch verbundenen Teilen gefertigt ist, von denen einer als abnehmbarer Behälter (11) ausgebildet ist, wobei der Antrieb (13) zur Drehung und Axialverschiebung auf der Aussenseite des Gehäuses (4) angeordnet ist, in dessen Innerem eine Immersionsflüssigkeit (14) vorhanden ist.

2. Speicher nach Anspruch 1, wobei die Durchmesser der Flansche (8, 9) den äußeren Durchmesser des zylindrischen Trägers (1) übersteigen.

3. Speicher nach Anspruch 1 oder 2, wobei der zylindrische Träger (1) aus einem Kunststoff besteht.

4. Speicher nach einem der Ansprüche 1 bis 3, wobei der abnehmbare Behälter eine Vorrichtung zum Festhalten des Flansches enthält und für den Transport und die Lagerung des zylindrischen Trägers (1) bestimmt ist.

**Revendications**

1. Mémoire opto-mécanique, contenant un support cylindrique (1) d'informations se présentant sous la forme d'une substrat de forme tubulaire comportant une couche d'enregistrement (2), lequel est disposé coaxialement à l'intérieur d'un boîtier cylindrique (4), et une source (7) de rayonnement lumineux modulable, des brides (8, 9) étant mises en place aux extrémités frontales du support cylindrique (1) d'informations sur au moins l'une desquelles est fixé au moyen d'une liaison détachable un organe d'actionnement (10) d'un entraînement (13) destiné à faire tourner et/ou à déplacer axialement en translation le support (1) cylindrique, tandis que le boîtier (4) est fabriqué au moyen de deux pièces reliées entre elles de façon hermétique, dont l'une a une conformation de récipient amovible (11), l'entraînement (13) destiné à la rotation et au déplacement axial en translation étant disposé du côté extérieur du boîtier (4), à l'intérieur duquel se trouve un liquide d'immersion (14).

2. Mémoire selon la revendication 1, caractérisée en ce que les diamètres des brides (8, 9) dépassent le diamètre extérieur du support cylindrique (1).

3. Mémoire selon la revendication 1 ou 2, caractérisée en ce que le support cylindrique (1) est réalisé en une matière plastique.

4. Mémoire selon une des revendications 1 à 3, caractérisée en ce que le récipient amovible contient un dispositif de fixation de brides et est destiné au transport et au stockage du support cylindrique (1).

**Claims**

1. An optical-mechanical store comprising a cylindrical information-carrier (1) which is in the form of a pipe-shaped substrate with a recording layer (2) and is arranged coaxially within a cylindrical housing (4), and a source (7) of a modulatable light beam, flanges (8, 9) being attached to the face ends of the cylindrical information-carrier (1) and a working part (10) of a drive (13) for rotation and/or axial displacement of the cylindrical carrier (1) being secured to at least one of the flanges by means of a detachable connection, whilst the housing (4) is manufactured from two parts hermetically connected to one another, one of these parts being constructed as a removable receptacle (11), the drive (13) for rotation and axial displacement being arranged on the outside of the housing (4) within which there is an immersion liquid (14).

2. A store in accordance with Claim 1, the diameters of the flanges (8, 9) exceeding the external diameter of the cylindrical carrier (1).

3. A store in accordance with Claim 1 or 2, the cylindrical carrier (1) being composed of a synthetic material.

4. A store in accordance with any one of Claims 1 to 3, the removable receptacle comprising a device for securing the flange, and being intended for the transportation and storage of the cylindrical carrier (1).

11

12

12

6 5

7

4

8

A

14

1

2

3

9

10

16

13

**FIG.1**

8

**FIG.6**

FIG.2

FIG.3

2

FIG.5

FIG.4